# EUROPEAN PATENT APPLICATION

(11) **EP 2 053 457 A1**
(43) Date of publication of application: **29.04.2009**
(21) Application number: 07791133.7
(22) Date of filing: 23.07.2007
(51) Int. Cl.: G02F 1/1347, G02F 1/13, G02F 1/133, G09F 9/00, H04N 5/66

(54) **INFORMATION PROCESSING DEVICE**

(30) Priority: 17.08.2006 JP 2006222211
(71) Applicant: NEC Corporation, Minato-ku Tokyo 108-8001 (JP)
(72) Inventor: OZAWA, Ryoh, Kodama-gun Saitama 367-0297 (JP); UMEDA, Koji, Kodama-gun Saitama 367-0297 (JP)
(74) Representative: Glawe, Delfs, Moll
(86) International application number: PCT/JP2007/064400
(87) International publication number: WO 2008/020526

(57) **Abstract**

The present invention is directed to provide a convenient information processing apparatus capable of easily switching the view angle of a display device and an output of an illuminating device of the information processing apparatus in accordance with a using state and a user request. An information processing apparatus including a liquid crystal display device 4 and an illuminating device 5 for illuminating the liquid crystal display device 4 from the rear side includes: transmission state varying means 6 for varying a transmission state of light from the illuminating device 5, the transmission state varying means being interposed between the liquid crystal display device 4 and the illuminating device 5; and view angle control means 7 for changing view angle of the liquid crystal display device 4 by controlling the transmission state varying means 6 when the illuminating device 5 is in a light-on state.

## Description

### Technical Field

The present invention relates to an information processing apparatus and, more particularly, to an information processing apparatus including a liquid crystal display device.

### Background Art

Information or the like displayed on a display device of an information processing apparatus at operating the information processing apparatus may be information the user does not want someone to read. However, in a crowded place, there is the possibility that the information is peeped by someone. As a countermeasure against this case, a method of adhering a peeping block film which narrows a view angle of a display device onto the display device is conventionally used.
Patent Document 1: Japanese Patent Application Laid-Open (JP-A) No. H08-76104
Patent Document 2: Japanese Patent Application Laid-Open (JP-A) No. H11-8435

### Disclosure of the Invention

### Problems to be Solved by the Invention

However, the method of adhering the peeping block film that narrows the view angle of the display device onto the display device as described above has a problem. Due to the narrowed view angle, even when the user wants to show a screen displayed to people around, the screen cannot be seen from them. In such a case, there is a method of enabling the peeping block film to be detached. However, it causes other problems such as troublesomeness of detachment of the film, breakage of the information processing apparatus due to detachment, and loss of the detached film.

The patent document 1 discloses a structure capable of switching a reflective liquid crystal display panel and a transmissive liquid crystal display panel. In the structure of the patent document 1, an optical shutter capable of switching between a state where reflectance is high and transmittance is low and a state where reflectance is low and transmittance is high is provided between a liquid crystal display cell and a backlight unit. The optical shutter and the backlight unit are connected to a mode change-over switch. In conjunction with the mode change-over switch, turning on/off of the backlight unit and switching of the optical shutter are performed. Concretely, when the backlight unit is off, the structure is used as the reflective liquid crystal display panel. When the backlight unit is on, the structure is used as the transmissive liquid crystal display panel.

The structure disclosed in the patent document 1 relates to a liquid display panel which is used both as the reflective liquid crystal display panel and the transmissive liquid crystal display panel. The luminance of the display screen is increased more than that of a conventional semi-transmissive liquid crystal panel. Consequently, when it is desired to narrow the view angle of the display device, a problem still occurs such that the method of adhering the peeping block film or the like has to be applied.

As a structure capable of switching the view angle of the display screen, a structure disclosed in the patent document 2 is used. Concretely, a first lens sheet is provided between a backlight unit and a liquid crystal display panel, and a second lens sheet is disposed at the back of the backlight unit. The first and second lens sheets are coupled to each other in a band shape. By rotating a roller provided for the backlight unit with a motor, the first lens sheet and the second lens sheet are switched. In the configuration, an angle of the vertex angle of a prism varies between the first and second lens sheets. Concretely, the vertex angle of the prism of one of the lens sheet used for the narrow view angle is larger than that of the other lens sheet used for the wide view angle, increasing light collecting power extremely. With the configuration, by switching the wide view angle to the narrow view angle, luminance from an oblique direction becomes lower than front-face luminance, so that a narrow view angle is realized.

In the structure of the display device disclosed in the patent document 2, the view angle of the display device is switched according to the light collecting characteristic of the lens sheets, that is, differences of the vertex angles of the prisms of the lens sheets. Consequently, in the case of changing the light collecting ability of the lens sheet, it is necessary to provide means for changing the lens sheet to a lens sheet having another light correcting characteristic or to provide means for changing the vertex angle of the prism of the lens sheet. Therefore, in the case of changing the light collecting characteristic of the lens sheet step by step, problems such as complication of the structure and troublesomeness occurs.

An exemplary object of the present invention is therefore to provide a convenient information processing apparatus solving the inconvenience of the conventional technique and capable of easily switching the view angle of a display device and an output of an illuminating device of the information processing apparatus in accordance with a using state and a user request.

### Means for Solving the Problems

An exemplary aspect of the present invention provides an information processing apparatus including a liquid crystal display device and an illuminating device for illuminating the liquid crystal display device from the rear side, including: transmission state varying means for varying a transmission state of light from the illuminating device, the transmission state varying means being interposed between the liquid crystal display device and the illuminating device; and view angle control means for changing view angle of the liquid crystal display device by controlling the transmission state varying means when the illuminating device is in a light-on state. With the configuration, the transmission state of the transmission state varying means can be varied by the view angle control means. As a result, by controlling the amount, direction of light emitted from the illuminating device to the liquid crystal display device, the view angle can be changed. Therefore, in the case where the user wants to prevent data displayed on the display device from being seen by people around, without adhering a view angle narrowing film or the like onto the display device, the view angle of the display device can be narrowed. Also in the case where the user wants to widen the view angle, the view angle can be changed without detaching the view angle narrowing film or the like. Since the view angle is changed in a state where the illuminating device is on, the clear display screen having high luminance can be obtained before and after the change.

The view angle control means controls the transmission state varying means so as to diffuse light from the illuminating device to thereby set the view angle of the liquid crystal display device to a wide view angle. With the configuration, the transmission state varying means transmits the light from the illuminating device while diffusing it, so that a clear display screen, even seen from the side, can be obtained. As compared with the case of widening the view angle by reflecting light from the outside, the luminance of the display screen can be increased.

The view angle control means controls the transmission state varying means to transmit light from the illuminating device to a predetermined direction to thereby set the view angle of the liquid crystal display device to a narrow view angle. With the configuration, since the transmission state varying means transmits light from the illuminating device to a predetermined direction, the luminance of the display screen in the transmission direction becomes high, and the luminance in another direction becomes low. In such a manner, the view angle can be narrowed.

The information processing apparatus may further include luminance control means for controlling luminance of the illuminating device. With the configuration, luminance of light transmitted by the transmission state varying means can be controlled by the illuminating device. Therefore, the invention can also address to the case where the view angle is changed and the display screen becomes dark.

The information processing apparatus is also characterized in that, at the time of changing the view angle of the liquid crystal display device by the view angle control means, the luminance control means controls luminance of the illuminating device on the basis of a state of view angles before and after the change of the liquid crystal display device. With the configuration, since the luminance control means controls the luminance of the illuminating device on the basis of the states of the liquid crystal display device before and after changing the view angle, a change in the luminance of the liquid crystal display device caused by a change in the view angle can be suppressed.

The luminance control means controls to decrease luminance of the illuminating device in the case where the view angle of the liquid crystal display device is changed from wide view angle to narrow view angle by the view angle control means, and to increase luminance in the case where the view angle is changed from the narrow view angle to the wide view angle. With the configuration, a change in the luminance of the liquid crystal display device caused by the change in the view angle can be suppressed. Therefore, the user can see the display screen more easily and fatigue of the eyes at the time of operation of the information processing apparatus can be lessened.

The information processing apparatus is also characterized in that, at the time of changing the view angle of the liquid crystal display by the view angle control means, the luminance control means controls luminance of the illuminating device so that front-face luminance of the liquid crystal display device before change of the view angle and that after the change of the view angle are equal to each other. With the configuration, the luminance of the illuminating device is adjusted so that the front-face luminance of the liquid crystal display device is not changed by the change in the view angle. Therefore, the user can see the display screen more easily and fatigue of the eyes of the user can be lessened.

The view angle control means may change the view angle of the liquid crystal display device to a preset view angle in accordance with display data of the liquid crystal display device. With the configuration, the view angle is automatically changed to a preset view angle according to the using state of the user. Therefore, troublesomeness to manually change the view angle for each of display data of the liquid crystal display device is eliminated.

The view angle control means may change view angle of the liquid crystal display device in accordance with a view angle setting instruction which is entered. In such a manner, the view angle can be changed promptly when the user wants the change.

The transmission state varying means can vary a transmission state in a plurality of stages. Since the transmission state varying means can vary the transmission state step by step, the view angle can be changed according to a preference of the user.

The information processing apparatus is also characterized in that when an optical characteristic of the illuminating device is not a narrow view angle, a view angle narrowing film that transmits light from the illuminating device in predetermined direction is interposed between the illuminating device and the transmission state varying means. As described above, even when light of the illuminating device does not have the characteristic of the narrow view angle and the narrow view angle is insufficient in the case of switching between the narrow view angle and the wide view angle, the view angle can be narrowed more effectively by interposing the view angle narrowing film.

Another exemplary aspect of the present invention provides a view angle controlling method for a liquid crystal display, for controlling view angle of the liquid crystal display device in an information processing apparatus including a liquid crystal display device, an illuminating device for illuminating the liquid crystal display device from the rear side, and transmission state varying means for varying a transmission state of light from the illuminating device, the transmission state varying means being interposed between the liquid crystal display device and the illuminating device. The view angle of the liquid crystal display device is changed by controlling the transmission state varying means when the illuminating device is in a light-on state.

The transmission state varying means may be controlled to diffuse light from the illuminating device to thereby set the view angle of the liquid crystal display device to a wide view angle. The transmission state varying means may be controlled to transmit light from the illuminating device to a predetermined direction, to thereby set the view angle of the liquid crystal display device to a narrow view angle. At the time of changing the view angle of the liquid crystal display device, luminance of the illuminating device may be controlled on the basis of view angles before and after the change of the liquid crystal display device.

Further another exemplary aspect of the present invention provides a program for realizing view angle control means for changing the view angle of a liquid crystal device, for making an information processing apparatus including a liquid crystal display device, an illuminating device for illuminating the liquid crystal display device from the rear side, and transmission state varying means for varying a transmission state of light from the illuminating device, the transmission state varying means being interposed between the liquid crystal display device and the illuminating device control the transmission state varying means to change the view angle of the liquid crystal display device when the illuminating device is in a light-on state.

The information processing apparatus realizes luminance control means for controlling luminance of the illuminating device on the basis of view angles before and after the change of the liquid crystal display device at the time of changing the view angle of the liquid crystal display device by the view angle control means.

Since the inventions of the method and the program of the above configuration operate in a manner similar to the information processing apparatus of the above, the exemplary object of the present invention can be achieved.

### Advantage of the Invention

Since the present invention is constructed and functions as described above, the view angle of the display device can be changed by the transmission state varying means and the illuminating device. Therefore, excellent effects which are not produced by the conventional techniques are obtained such that the view angle can be changed without adhering the peeping block film or the like on the display device, and the user can select a view angle according to using state.

### Best Modes for Carrying out the Invention

The present invention is characterized in that view angle control means changes view angle of a liquid crystal display device by controlling transmission state varying means and a clear display screen having high luminance is displayed before and after the change. Concrete configurations and operations will be described below with reference to exemplary embodiments.

In the following, a cellular phone having the above-described characteristic will be described as an example of an information processing apparatus of the present invention. The cellular phone is an example and other information processing apparatuses (such as a PDA and a notebook-sized personal computer) having the above-described characteristic may be applied.

Although the case of using a polymer-dispersed liquid crystal as the transmission state varying means will be described below, the present invention is not limited to the case using the polymer-dispersed liquid crystal. Any means controlled by the view angle control means and capable of varying a light transmission state may be used.

In the following, the case of using a controller such as a CPU as the view angle control means and the luminance control means will be described. However, the invention is not limited to the case of electronic control of the CPU or the like. Various mechanical controllers may be also employed.

### First Exemplary Embodiment

A exemplary first embodiment of the present invention will be described with reference to FIGS. 1 to 8. FIG. 1 is a perspective view showing a configuration of a cellular phone in the first exemplary embodiment. FIG. 2 is a block diagram showing the configuration of the cellular phone. FIG. 3 is a functional block diagram showing a configuration of a controller. FIG. 4 is an enlarged cross section showing a configuration of a polymer-dispersed liquid crystal. FIG. 5 is a state diagram showing a state of the polymer-dispersed liquid crystal when the display device has a wide view angle. FIG. 6 is a state diagram showing a state of the polymer-dispersed liquid crystal when the display device has a narrow view angle. FIGS. 7 and 8 are flowcharts showing operations of a cellular phone.

### Configuration

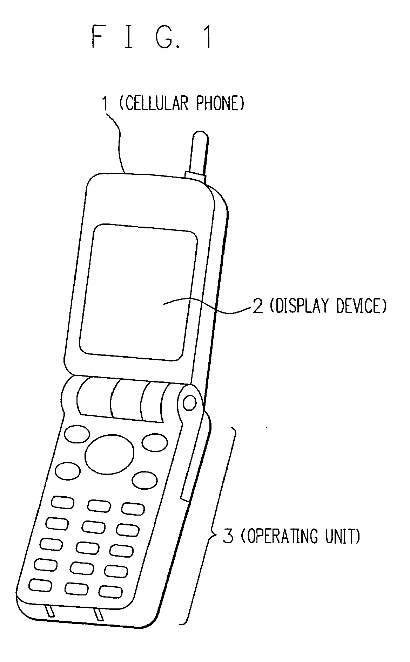

As shown in FIG. 1, a cellular phone 1 (information processing apparatus) in the present invention is, for example, a foldable cellular phone. In planes positioned inside in a folded state, a display device 2 for displaying characters and images and an operating unit 3 for inputting characters and setting functions are provided.

The operating unit 3 is a numerical keypad or the like and is provided in the plane positioned inside when the cellular phone 1 is folded. The operating unit 3 is used to enter an instruction to a controller 7 which will be described later and to enter characters, change setting of functions, and the like.

The display device 2 includes a liquid crystal display device 4, an illuminating device 5, and a polymer-dispersed liquid crystal 6 and can display various data at a narrow view angle or a wide view angle in cooperation with the controller. Concretely, the illuminating device 5 is provided on the back side (the side opposite to the display plane) of the liquid crystal display device 4. The polymer-dispersed liquid crystal 6 is disposed between the liquid crystal display device 4 and the illuminating device 5. The liquid crystal display device 4, the illuminating device 5, and the polymer-dispersed liquid crystal 6 are controlled by the controller 7. Each of the devices functions in accordance with an instruction from the controller 7. The functions of the liquid crystal display device 4, the illuminating device 5, and the polymer-dispersed liquid crystal 6 will be described in detail below.

The liquid crystal display device 4 is, for example, a transmission-type liquid crystal display for displaying characters and images by using the liquid crystal. The illuminating device 5 is provided on the back side of the liquid crystal display device 4, and the polymer-dispersed liquid crystal 6 is disposed between the liquid crystal display device 4 and the illuminating device 5. Light emitted from the illuminating device 5 passes through the polymer-dispersed liquid crystal 6 and enters the liquid crystal display device 4. At this time, the direction and intensity of light incident on the liquid crystal display device 4 changes according to a voltage application state of a transparent electrode 9 of the polymer-dispersed liquid crystal 6 which will be described later. By the change, the view angle and luminance of the liquid crystal display device 4 changes. The liquid crystal display device 4 is controlled by a liquid crystal display processor 71 in the controller 7, which will be described later. Display data according to an instruction from the liquid crystal display processor 71 is displayed on the liquid crystal display device 4.

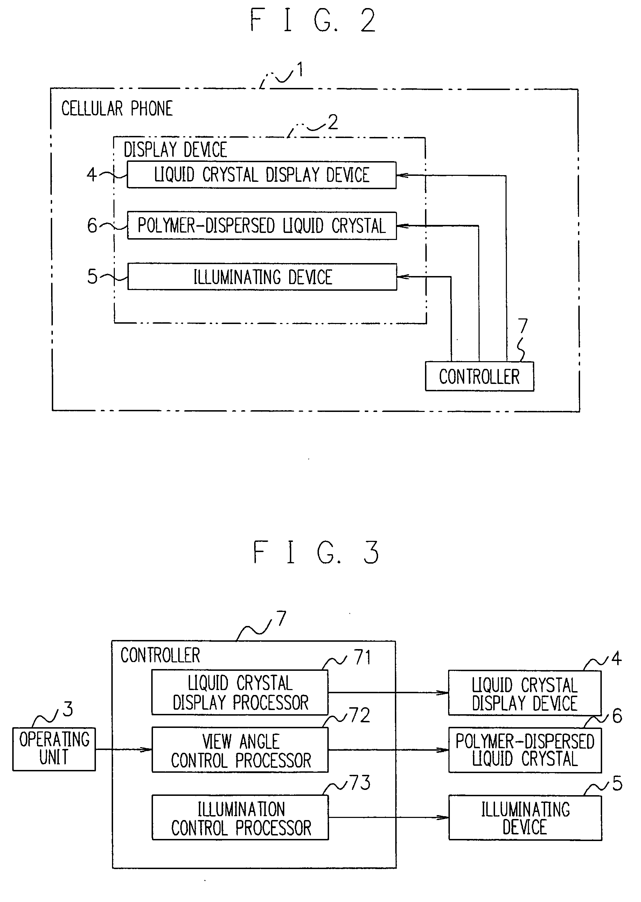

The illuminating device 5 is, for example, a light emitting diode. The illuminating device 5 has a narrow view angle characteristic such that it illuminates light when seen from the front and it is dark when seen obliquely. The illuminating device 5 illuminates the polymer-dispersed liquid crystal 6 from the rear side (the bottom side in FIG. 2). The light emitted from the illuminating device 5 passes through the polymer-dispersed liquid crystal 6 and is incident on the liquid crystal display device 4. According to the voltage application state of the transparent electrode 9 of the polymer-dispersed liquid crystal 6 which will be described later, the direction and intensity of light passed through the polymer-dispersed liquid crystal 6 change. The illuminating device 5 is controlled by an illumination control processor 73 in the controller 7, which will be described later. According to an instruction from the illumination control processor 73, light-on and light-off states and output adjustment of illumination of the illuminating device 5 are adjusted. In the exemplary embodiment, it is described that the illuminating device 5 has the narrow view angle characteristic. However, the illuminating device 5 may be an illuminating device of a wide view angle characteristic. A concrete example in the case of using the illuminating device of the wide view angle characteristic will be described in a second embodiment.

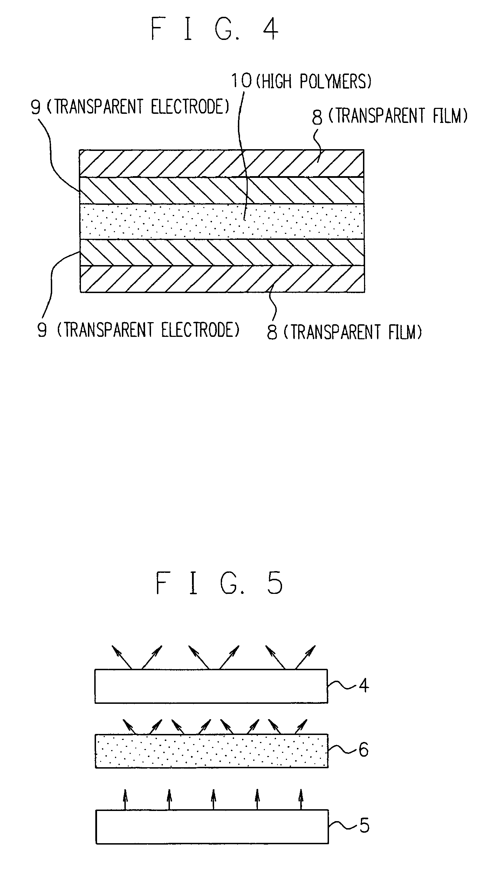

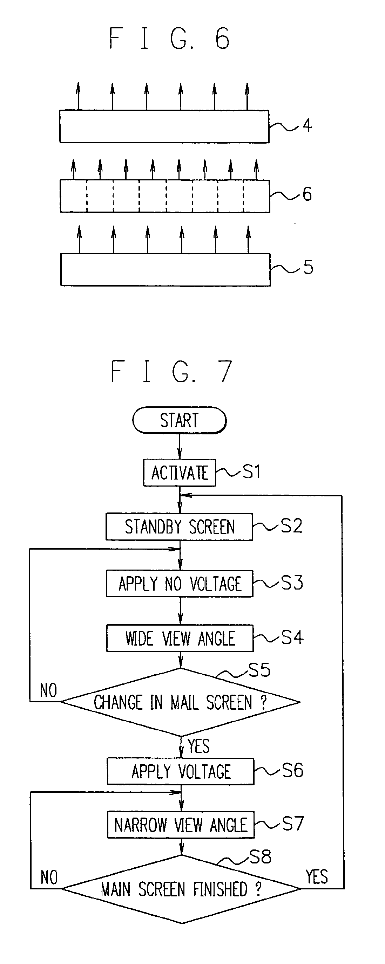

As shown in FIG. 4, in the polymer-dispersed liquid crystal 6 (transmission state varying means), a transparent electrode 9 is formed on the inside of each of two facing transparent films 8. High polymers 10 are filled between the transparent electrodes 9. The polymer-dispersed liquid crystal 6 is disposed between the liquid crystal display device 4 and the illuminating device 5. Light emitted from the illuminating device 5 passes through the polymer-dispersed liquid crystal 6. The polymer-dispersed liquid crystal 6 is controlled by a view angle control processor 72 in the controller 7 which will be described later. A voltage applied to the transparent electrodes 9 is changed according to an instruction from the view angle control processor 72. As shown in FIG. 5, in the state where no voltage is applied to the transparent electrodes 9, the high polymers 10 between the transparent electrodes 9 are oriented in arbitrary directions, so that the polymer-dispersed liquid crystal 6 becomes opaque. In the opaque state, as shown by the arrows in FIG. 5, the light passes while being diffused. Consequently, the view angle of the liquid crystal display device 2 becomes wide. Therefore, even when the liquid crystal display device 2 is seen in an oblique direction, a clear screen of high luminance can be seen. As shown in FIG. 6, in a state where a voltage is applied to the transparent electrodes 9, the high polymers 10 between the transparent electrodes 9 are oriented in a predetermined direction, so that the polymer-dispersed liquid crystal 6 becomes transparent. In the transparent state, as shown by the arrows of FIG. 6, the light passes without changing its directions and orientations and keeping narrow view angle characteristic of the illuminating device 5, so that the view angle of the liquid crystal display device 2 is narrowed. Therefore, the luminance in the case where the liquid crystal device 2 is seen from the front becomes higher than that of the wide view angle.

The controller 7 (view angle control means and luminance control means) is, for example, a CPU or the like for controlling the cellular phone 1 and is provided in the cellular phone 1. In the controller 7, the liquid crystal display processor 71, the view angle control processor 72, and the illumination control processor 73 are arranged. The controller 7 is connected to the operating unit 3 and, on the basis of operation of the operating unit 3, sends an instruction to the liquid crystal display processor 71, the view angle control processor 72, and the illumination control processor 73. In the exemplary embodiment, the case where the controller 7 is provided in the cellular phone 1 has been described as an example. However, the invention is not limited to the case where the controller 7 is provided in the cellular phone 1 and the controller 7 may be provided in the display device 2.

The liquid crystal display processor 71 controls the display screen by a change in display data or the like. In the case of switching the display screen of the liquid crystal display device 4 from, for example, a standby screen to a mail screen by an operation of the operating unit 3 of the user, an instruction inputted to the operating unit 3 is received by the liquid crystal display processor 71. On the basis of the instruction, the liquid crystal display processor 71 sends an instruction to the liquid crystal display device 4 to change the display screen to the mail screen.

The view angle control processor 72 (view angle control means) controls the transmission state of the polymer-dispersed liquid crystal 6. The view angle control processor 72 inquires a memory unit (not shown) about whether the display screen before switching is set to the narrow view angle or wide view angle. The view angle control processor 72 also inquires the memory unit about whether the display screen after switching is set to the narrow view angle or wide view angle. The memory unit stores information set by the user. As a result of the inquiry to the memory unit, in the case where the display screen before switching is set to the narrow view angle and the display screen after switching is set to the wide view angle, an instruction to stop the voltage is transmitted from the view angle control processor 72 to the polymer-dispersed liquid crystal 6. In the case where the display screen before switching is set to the wide view angle and the display screen after switching is set to the narrow view angle, an instruction to apply voltage is transmitted from the view angle control processor 72 to the polymer-dispersed liquid crystal 6. By the operation, the polymer-dispersed liquid crystal 6 can be electronically controlled. The view angle control processor 72 can also switch the view angle by an operation of the user irrespective of the setting state of the view angle. The view angle control processor 72 receives the view angle switching instruction sent from the operating unit 3 by the operation of the user and sends an instruction to apply voltage or an instruction to stop voltage to the polymer-dispersed liquid crystal 6.

The illumination control processor 73 (luminance control means) controls the illuminating device 5. When the user operates the operating unit 3, or when the view angle switching instruction is transmitted from the view angle control processor 72 to the polymer-dispersed liquid crystal 6 to change the view angle, a light-on instruction is transmitted from the illumination control processor 73 to the illuminating device 5. When the operating unit 3 is not operated for a predetermined time, a light-off instruction is transmitted from the illumination control processor 73 to the illuminating device 5.

The view angle control processor 72 controls the voltage to be applied across the transparent electrodes 9 to change the orientation directions of the high polymers 10 step by step, thereby enabling the view angle in the above-described configuration to be changed step by step. Concretely, the orientation direction of the high polymer 10 can be set, for example, in five stages between the narrow view angle and the wide view angle, and the view angle can be changed step by step by an operation of the operating unit 3. By the operation, the view angle can be changed by a simple method, the weight of the information processing apparatus can be reduced, and the structure of the display device can be thinned.

### Operation

The operation of the cellular phone 1 with the above-described configuration will be described with reference to FIG. 7. First, the cellular phone 1 is started (step S1). At this time, an instruction is sent from the controller 7 to the liquid crystal display device 4, the illuminating device 5, and the polymer-dispersed liquid crystal 6. On the basis of the instruction, light is emitted from the illuminating device 5 and the standby screen is displayed on the liquid crystal display device 4 (step S2). When the standby screen is displayed, no instruction is transmitted from the view angle control processor 72 of the controller 7 to the polymer-dispersed liquid crystal 6, and no voltage is applied to the transparent electrodes 9 (step S3). Therefore, as described above, the high polymers 10 are oriented in arbitrary directions (refer to FIG. 5), and light emitted from the illuminating device 5 passes while being diffused. Consequently, the view angle of the display device 2 becomes a wide view angle (step S4).

Subsequently, the user operates the operating unit 3 to change the display data to the mail screen (YES in step S5). The setting information is read and an instruction is transmitted from the controller 7 to the liquid crystal display device 4, the illuminating device 5, and the polymer-dispersed liquid crystal 6. The liquid crystal display device 4 receives the instruction from the liquid crystal display processor 71 and changes the display data to the mail screen. The display state of the mail screen is set to the narrow view angle by the user, and the information set by the user is stored in the memory unit or the like in the cellular phone 1 (not shown). Simultaneously with the change of the mail screen, an instruction is transmitted from the view angle control processor 72 to the polymer-dispersed liquid crystal 6 and voltage is applied to the transparent electrodes 9 (step S6). At this time, as described above, the high polymers 10 are oriented in a predetermined direction (refer to FIG. 6), so that the polymer-dispersed liquid crystal 6 becomes a transparent state, and the view angle of the display device 2 becomes a narrow view angle (step S7). When an operation on the mail screen is finished, an instruction is transmitted again from the controller 7 to the liquid crystal display device 4, the illuminating device 5, and the polymer-dispersed liquid crystal 6, and the display screen returns to the standby screen (YES in step S8).

Although it has been described that the view angle of the standby screen is a wide view angle, the view angle may be a narrow view angle. The setting can be changed according to the preference of the user. Although it has been described that the mail screen is set to the narrow view angle, the screen is not limited to the mail screen but may be another display screen whose view angle is set to a narrow view angle.

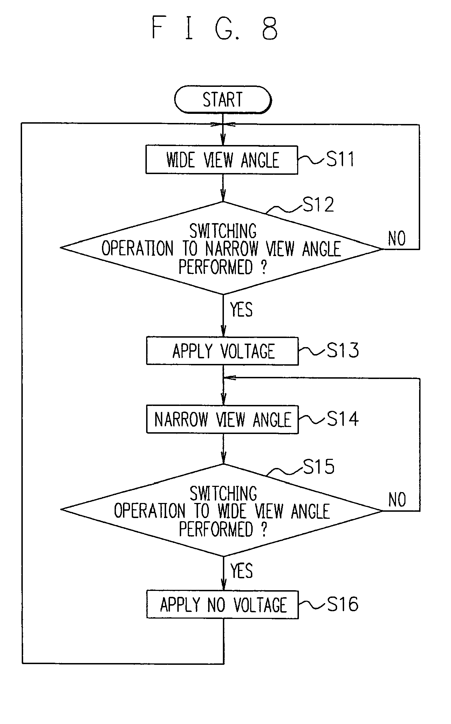

Next, the operation of arbitrarily changing the view angle by the user will be described with reference to FIG. 8. First, the cellular phone 1 is started. An instruction is transmitted from the controller 7 to the liquid crystal display device 4, the illuminating device 5, and the polymer-dispersed liquid crystal 6, and the display data upon start is displayed. Description will be given on assumption that the view angle upon start is a wide view angle (step S11). Next, the user operates the operating unit 3 to change the view angle from the wide view angle to the narrow view angle (YES in step S12). An instruction to change the view angle is transmitted from the view angle control processor 72 to the polymer-dispersed liquid crystal 6, and the polymer-dispersed liquid crystal 6 applies voltage to the transparent electrodes 9 (step S13). By applying the voltage to the transparent electrodes 9, the high polymers 10 are oriented in a predetermined direction, so that the polymer-dispersed liquid crystal 6 becomes transparent, and the view angle of the display device 2 becomes a narrow view angle (step S14).

Subsequently, the user operates the operating unit 3 to change the view angle from the narrow view angle to the wide view angle (YES in step S15). At this time, the view angle change instruction is transmitted again from the view angle control processor 72 to the polymer-dispersed liquid crystal 6. On receipt of the instruction, the polymer-dispersed liquid crystal 6 stops the voltage of the transparent electrodes 9 (step S16). By stopping the voltage of the transparent electrodes 9, the high polymers 10 are oriented in arbitrary directions. Consequently, the transmission light is diffused, and the view angle of the display device 2 returns to the wide view angle. In such a manner, even when the view angle of the display screen is pre-set by the user, the view angle can be properly changed according to the situations.

### Second Exemplary Embodiment

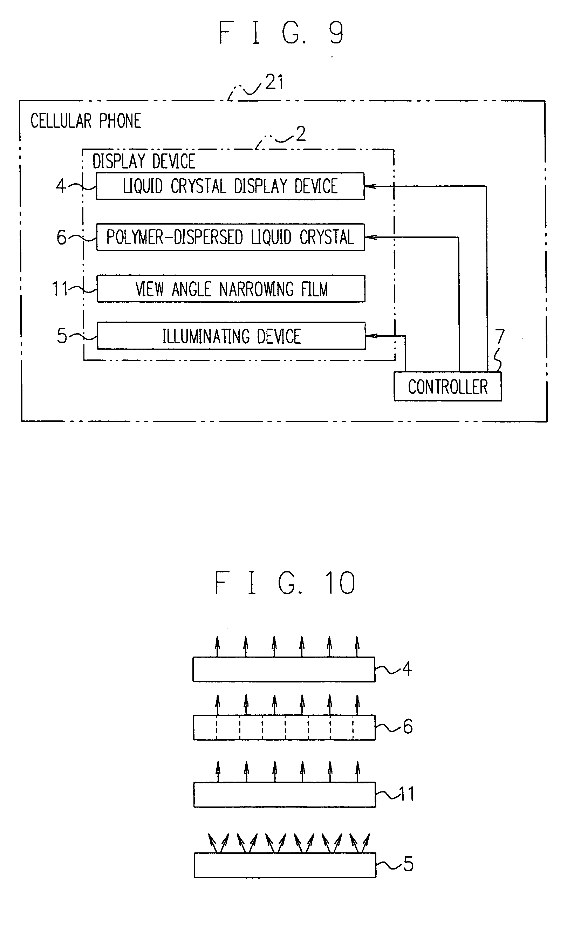

A second exemplary embodiment of the present invention will now be described with reference to FIGS. 9 and 10. FIG. 9 is a block diagram showing a configuration of a cellular phone in the second exemplary embodiment. FIG. 10 is a state diagram showing a transmission state of light from the illuminating device in the display device. A configuration in the second exemplary embodiment is similar to that of the cellular phone 1 in the first exemplary embodiment except for the point that a view angle narrowing film 11 is interposed between the polymer-dispersed liquid crystal and the illuminating device.

A cellular phone 21 in the present invention is, for example, a foldable cellular phone. The cellular phone 21 includes, in planes positioned inside when the cellular phone 21 is folded, the display device 2 for displaying characters and images and the operating unit 3 for inputting characters and setting functions. The display device 2 includes, as shown in FIG. 9, the liquid crystal display device 4, the illuminating device 5, the polymer-dispersed liquid crystal 6, and the view angle narrowing film 11. The cellular phone 21 includes therein the controller 7 and controls the liquid crystal display device 4, the illuminating device 5, and the polymer-dispersed liquid crystal 6. In the following, the configuration different from that of the first exemplary embodiment will be described in detail below with reference to FIGS. 9 and 10.

The view angle narrowing film 11 is a film that transmits light from the illuminating device 5 in a predetermined direction. As shown in FIG. 9, the view angle narrowing film 11 is interposed between the polymer-dispersed liquid crystal 6 and the illuminating device 5. As shown in FIG. 10, the view angle narrowing film 11 is used in the case where the illuminating device 5 has a wide view angle characteristic of emitting light in arbitrary directions. As shown by the arrows in FIG. 10, The light emitted from the illuminating device 5 transmits the view angle narrowing film 11 while changing the directions of light and orientations to a predetermined direction. As a result, even when the optical characteristic of the illuminating device 5 is a wide view angle and, as described above, a sufficient narrow view angle cannot be obtained at the time of switching the view angle, the view angle narrowing film 11 transmits the light effectively to one direction and the narrow view angle can be set.

### Third Exemplary Embodiment

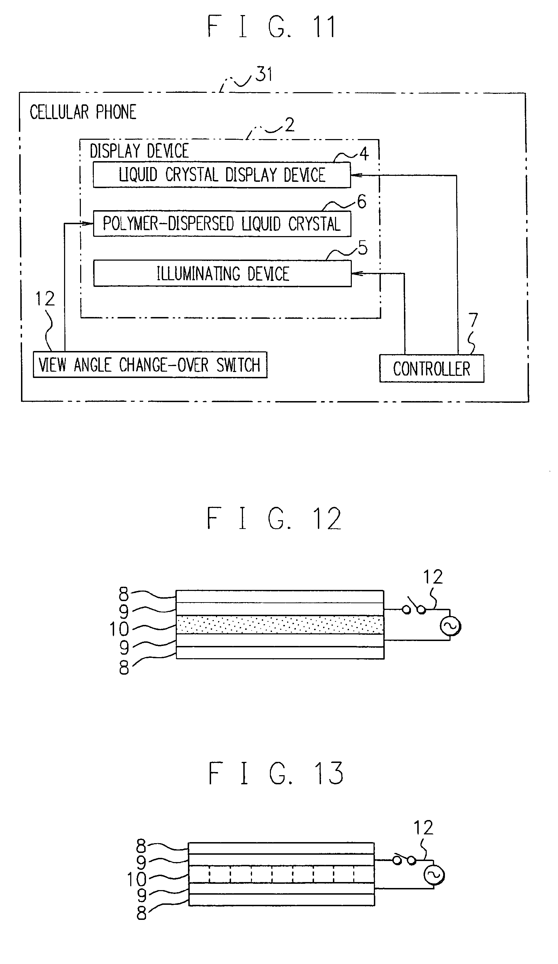

A third exemplary embodiment of the present invention will now be described with reference to FIGS. 11 to 13. FIG. 11 is a block diagram showing a configuration of a cellular phone. FIGS. 11 to 13 are state diagrams showing a state of a view angle change-over switch 12 and the polymer-dispersed liquid crystal. A configuration employed in the third exemplary embodiment is similar to that of the cellular phone 1 in the first exemplary embodiment except for the point that the view angle change-over switch 12 is provided for a cellular phone 31.

The cellular phone 31 in the present invention is, for example, a foldable cellular phone. The cellular phone 31 includes, in planes positioned inside when the cellular phone 31 is folded, the display device 2 for displaying characters and images, the operating unit 3 for inputting characters and setting functions, and the view angle change-over switch 12 for switching the view angle. In the following, the configuration different from that of the first exemplary embodiment will be described in detail with reference to FIGS. 11 to 13.

The view angle change-over switch 12 (view angle control means) is, for example, provided in a side face of the cellular phone 31 and is a slide switch for switching between a narrow view angle and a wide view angle. When the slide switch is slid in one direction, the view angle of the display screen is narrowed. When the slide switch is slid to the other direction, the view angle becomes wide. As shown in FIG. 11, the view angle change-over switch 12 is connected to the polymer-dispersed liquid crystal 4. When the view angle change-over switch 12 is set to the wide view angle, as shown in FIG. 12, no voltage is applied to the transparent electrodes 9 of the polymer-dispersed liquid crystal 4, and the high polymers are oriented in arbitrary directions. Therefore, the polymer-dispersed liquid crystal 6 is in an opaque state. When the view angle change-over switch 12 is set to the narrow view angle, as shown in FIG. 13, voltage is applied to the transparent electrodes 9 of the polymer-dispersed liquid crystal 4, and the high polymers 10 are oriented in a predetermined direction, so that the polymer-dispersed liquid crystal 6 is in a transparent state.

### Fourth Exemplary Embodiment

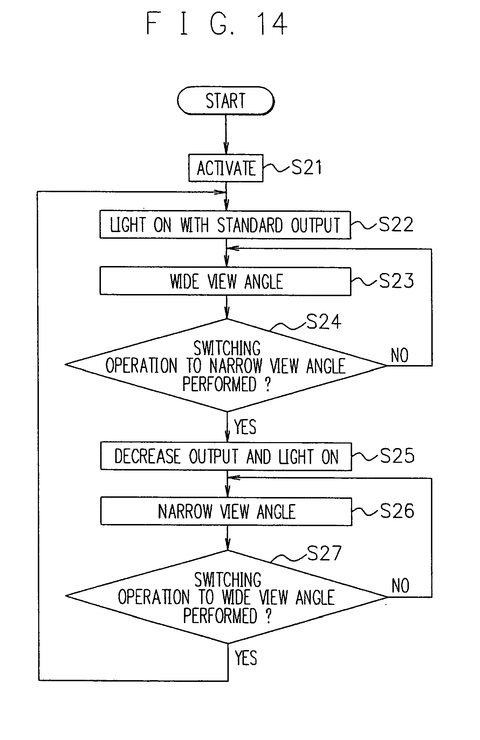

A fourth exemplary embodiment of the present invention will now be described with reference to FIG. 14. FIG. 14 is a flowchart showing an operation of a cellular phone. A configuration employed in the fourth exemplary embodiment is similar to that of the cellular phone 1 in the first exemplary embodiment except for the point that the illuminating device 5 is controlled so that front-face luminance of the display device 2 before a change in the view angle and that after the change in the view angle are equal to each other. The configuration different from that of the first exemplary embodiment will be described in detail below.

The illumination control processor 73 controls the illuminating device 5. The illumination control processor 73 inquires the memory unit (not shown) about whether the display screen before the change is set to a narrow view angle or a wide view angle. The illumination control processor 73 also inquires the memory unit about whether the switched display screen is set to a narrow view angle or a wide view angle. As a result of the inquiry to the memory unit, in the case where the display screen before the change is set to a narrow view angle and the display screen after the change is set to a wide view angle, an instruction of increasing an output is transmitted from the illumination control processor 73 to the illuminating device 5. In the case where the display screen before the change is set to a wide view angle and the display screen after the change is set to a narrow view angle, an instruction of decreasing an output is transmitted from the illumination control processor 73 to the illuminating device 5.

Next, an operation of the cellular phone in the fourth exemplary embodiment will be described with reference to FIG. 14. First, the cellular phone is started (step S21). Upon start, a light-on instruction is transmitted from the illumination control processor 73 to the illuminating device 5 and, on the basis of the instruction, the illuminating device 5 is turned on (step S22). The exemplary embodiment will be described on assumption that an output of the illuminating device 5 at this time is used as a standard output and the view angle upon start is a wide view angle (step S23).

Subsequently, the user operates the operating unit 3 to change the view angle to a narrow view angle (YES in step S24). An output change instruction is transmitted from the illumination control processor 73 to the illuminating device 5. The illuminating device 5 which receives the instruction decreases an output value so that the front-face luminance of the display device 2 before the change and that after the change are equal to each other, and lights on (step S25). A view angle change instruction is transmitted from the view angle control processor 72 to the polymer-dispersed liquid crystal 6 and, in a manner similar to the first exemplary embodiment, the view angle of the display device 2 is changed to a narrow view angle (step S26).

Next, the user operates the operating unit 3 to change the view angle to a wide view angle (YES in step S27). An output change instruction is transmitted from the illumination control processor 73 to the illuminating device 5. The illuminating device 5 which has received the instruction changes to the standard output (output at the time of a wide view angle), that is, an output higher than the output at the time of a narrow view angle (step S25) and lights on. As a result, a change in the front-face luminance of the display device 2 caused by the change in the view angle can be suppressed, and fatigue of the eyes of the user can be lessened.

The control of the illuminating device 5 by the illumination control processor 73 is not limited to the above-described control. For example, luminance of the display device 2 in a narrow view angle state and that in a wide view angle state are pre-set according to preference of the user. On the basis of the setting, an output of the illuminating device 5 may be switched at the time of changing the view angle.

This application is based upon and claims the benefit of priority from Japanese patent application No. 2006-222211, filed on August 17, 2006, the disclosure of which is incorporated herein in its entirety by reference.

### Industrial Applicability

The present invention can be used for an information processing apparatus or the like including a liquid crystal display device and has industrial applicability.

### Brief Description of the Drawings

FIG. 1 is a perspective view showing a configuration of a cellular phone in a first exemplary embodiment.
FIG. 2 is a block diagram showing the configuration of the cellular phone.
FIG. 3 is a functional block diagram showing a configuration of a controller.
FIG. 4 is an enlarged cross section showing a configuration of a polymer-dispersed liquid crystal.
FIG. 5 is a state diagram showing a state of the polymer-dispersed liquid crystal when the display device has a wide view angle.
FIG. 6 is a state diagram showing a state of the polymer-dispersed liquid crystal when the display device has a narrow view angle.
FIG. 7 is a flowchart showing an operation of the cellular phone in a first exemplary embodiment.
FIG. 8 is a flowchart showing the operation of the cellular phone in the first exemplary embodiment.
FIG. 9 is a block diagram showing a configuration of a cellular phone in a second exemplary embodiment.
FIG. 10 is a state diagram showing a state of transmission of light from the lighting device in the display device.
FIG. 11 is a block diagram showing a configuration of a cellular phone in a third exemplary embodiment.
FIG. 12 is a state diagram showing a state of the polymer-dispersed liquid crystal when a view angle change-over switch has a wide view angle.
FIG. 13 is a state diagram showing a state of the polymer-dispersed liquid crystal when the view angle change-over switch has a narrow view angle.
FIG. 14 is a flowchart showing an operation of a cellular phone in a fourth exemplary embodiment.

### Description of Reference Numerals

- 1, 21, 31: cellular phone (information processing apparatus)
- 2: display device
- 3: operating unit
- 4: liquid crystal display device
- 5: illuminating device
- 6: polymer-dispersed liquid crystal (transmission state varying means
- 7: controller (view angle control means, luminance control means)
- 8: transparent film
- 9: transparent electrode
- 10: high polymer
- 11: view angle narrowing film
- 12: view angle change-over switch (view angle control means)
- 71: liquid crystal display processor
- 72: view angle control processor (view angle control means)
- 73: illumination control processor (luminance control means)

## Claims

1. An information processing apparatus including a liquid crystal display device and an illuminating device for illuminating the liquid crystal display device from the rear side, comprising:
transmission state varying means for varying a transmission state of light from the illuminating device, the transmission state varying means being interposed between the liquid crystal display device and the illuminating device; and
view angle control means for changing view angle of the liquid crystal display device by controlling the transmission state varying means when the illuminating device is in a light-on state.

2. The information processing apparatus according to claim 1, wherein the view angle control means controls the transmission state varying means so as to diffuse light from the illuminating device to thereby set the view angle of the liquid crystal display device to a wide view angle.

3. The information processing apparatus according to claim 1 or 2, wherein the view angle control means controls the transmission state varying means to transmit light from the illuminating device to a predetermined direction to thereby set the view angle of the liquid crystal display device to a narrow view angle.

4. The information processing apparatus according to claim 1, 2, or 3, further comprising luminance control means for controlling luminance of the illuminating device.

5. The information processing apparatus according to claim 4, wherein at the time of changing the view angle of the liquid crystal display device by the view angle control means, the luminance control means controls luminance of the illuminating device on the basis of a state of view angles before and after the change of the liquid crystal display device.

6. The information processing apparatus according to claim 5, wherein the luminance control means controls to decrease luminance of the illuminating device in the case where the view angle of the liquid crystal display device is changed from wide view angle to narrow view angle by the view angle control means, and to increase luminance in the case where the view angle is changed from the narrow view angle to the wide view angle.

7. The information processing apparatus according to claim 6, wherein at the time of changing the view angle of the liquid crystal display by the view angle control means, the luminance control means controls luminance of the illuminating device so that front-face luminance of the liquid crystal display device before change of the view angle and that after the change of the view angle are equal to each other.

8. The information processing apparatus according to claim 1, 2, 3, 4, 5, 6, or 7, wherein the view angle control means changes the view angle of the liquid crystal display device to a preset view angle in accordance with display data of the liquid crystal display device.

9. The information processing apparatus according to claim 1, 2, 3, 4, 5, 6, 7, or 8, wherein the view angle control means changes view angle of the liquid crystal display device in accordance with a view angle setting instruction which is entered.

10. The information processing apparatus according to claim 1, 2, 3, 4, 5, 6, 7, 8, or 9, wherein the transmission state varying means can vary a transmission state in a plurality of stages.

11. The information processing apparatus according to claim 1, 2, 3, 4, 5, 6, 7, 8, 9, or 10, wherein when an optical characteristic of the illuminating device is not a narrow view angle, a view angle narrowing film that transmits light from the illuminating device in predetermined direction is interposed between the illuminating device and the transmission state varying means.

12. A view angle controlling method for a liquid crystal display device for controlling view angle of the liquid crystal display device in an information processing apparatus including a liquid crystal display device, an illuminating device for illuminating the liquid crystal display device from the rear side, and transmission state varying means for varying a transmission state of light from the illuminating device, the transmission state varying means being interposed between the liquid crystal display device and the illuminating device,
wherein the view angle of the liquid crystal display device is changed by controlling the transmission state varying means when the illuminating device is in a light-on state.

13. The view angle controlling method for a liquid crystal display device according to claim 12, wherein the transmission state varying means is controlled to diffuse light from the illuminating device to thereby set the view angle of the liquid crystal display device to a wide view angle.

14. The view angle controlling method for a liquid crystal display device according to claim 12 or 13, wherein the transmission state varying means is controlled to transmit light from the illuminating device to a predetermined direction to thereby set the view angle of the liquid crystal display device to a narrow view angle.

15. The view angle controlling method for a liquid crystal display device according to claim 12, 13, or 14, wherein at the time of changing the view angle of the liquid crystal display device, luminance of the illuminating device is controlled on the basis of view angles before and after the change of the liquid crystal display device.

16. A program for making an information processing apparatus including a liquid crystal display device, an illuminating device for illuminating the liquid crystal display device from the rear side, and transmission state varying means for varying a transmission state of light from the illuminating device, the transmission state varying means being interposed between the liquid crystal display device and the illuminating device control the transmission state varying means to change the view angle of the liquid crystal display device when the illuminating device is in a light-on state.

17. The program according to claim 16, wherein the information processing apparatus realizes luminance control means for controlling luminance of the illuminating device on the basis of view angles before and after the change of the liquid crystal display device at the time of changing the view angle of the liquid crystal display device by the view angle control means.
